# FASCICULE DE BREVET EUROPEEN

(11) **EP 0 516 492 B1**
(45) Date de publication et mention de la délivrance du brevet: **21.12.1994**
(21) Numéro de dépôt: 92400713.1
(22) Date de dépôt: 18.03.1992
(51) Int. Cl.: B60T 13/567

(54) **Bremsenmontageeinheit für Kraftfahrzeuge**
Sous ensemble de freinage pour véhicule
Brake sub-assembly for vehicles

(30) Priorité: 28.05.1991 FR 9106377
(43) Date de publication de la demande: 02.12.1992
(73) Titulaire: ALLIEDSIGNAL EUROPE SERVICES TECHNIQUES, 93700 Drancy (FR)
(72) Inventeur: Moinard, Patrice, BENDIX EUROPE SERV. TECHNIQUES, F-93700 Drancy (FR); Castel, Philippe, BENDIX EUROPE SERV. TECHNIQUES, F-93700 Drancy (FR)
(74) Mandataire: Bentz, Jean-Paul

(56) Documents cités:
- EP-A- 0 104 105
- DE-A- 2 814 419
- FR-A- 2 636 286
- GB-A- 2 160 603

## Description

La présente invention concerne un sous-ensemble de freinage pour véhicule comportant un compartiment moteur et un habitacle séparés par un tablier, le dit sous-ensemble comprenant : un servomoteur pneumatique d'assistance commandé au moyen d'une pédale et destiné à être fixé au tablier, le servomoteur comprenant coaxialement une coquille avant présentant une paroi cylindrique, et un couvercle arrière, et comportant intérieurement deux chambres séparées de façon étanche par un piston pourvu d'une membrane assurant l'étanchéité entre les deux chambres, un maître cylindre fixé à la coquille avant et au moins une pédale de frein.

De tels sous-ensembles sont bien connus dans l'art. Les documents US-A-3 137 361, EP-A-0 104 105, US-A-4 022 112, en décrivent, parmi d'autres, des exemples connus.

En règle générale, le couvercle arrière du servomoteur est fixé au tablier dans le compartiment moteur par l'intermédiaire d'une platine à laquelle est fixée une pièce d'appui où sont montés prisonniers les pivots des différents pédales.

Avec ce type de sous-ensemble, la mise en place du sous-ensemble dans le véhicule est une opération délicate qu'il est difficile d'automatiser.

Dans US-A-3 137 361 précité, le couvercle est réalisé par une mise en forme du tablier auquel est fixé la pièce d'appui des pédales. L'assemblage des composants du servomoteur doit alors être effectué en chaîne de montage du véhicule, ce qui rend l'opération également très délicate.

Par ailleurs, les forces engendrées lors d'un freinage sont très importantes dont il résulte des problèmes de fixation entre la coquille et le couvercle du servomoteur, puisque, dans un montage tel que celui décrit dans US-A-4 022 112, toutes les forces transitent par la jonction de ces deux pièces. Dans ce but, selon EP-A-0 104 105, la coquille est directement fixée au tablier dans le compartiment moteur. Dans ce cas, les forces s'exercent non sur la jonction entre le couvercle et la coquille, mais entre la coquille et le jeu de vis de fixation de la coquille au tablier. Ceci déplace le problème de fixation mais ne l'élimine pas.

Enfin, entre les deux chambres intérieures du servomoteur, et entre celles-ci et l'extérieur du servomoteur dans la zone de jonction du couvercle et de la coquille du servomoteur subsiste un problème d'étanchéité.

Dans la solution décrite dans US-A-4 022 112, ce problème est résolu en emprisonnant l'extrémité périphérique de la membrane d'étanchéité entre le couvercle et la coquille du servomoteur, puis en sertissant les deux pièces l'une à l'autre pendant l'application d'une forte pression axiale entre les deux. Ce mode de réalisation rend onéreuse la fabrication du servomoteur et détermine localement des zones possibles de corrosion. Dans le mode de réalisation décrit dans EP-A-0 104 105, le couvercle porte une pièce venant compresser radialement l'extrémité périphérique de la membrane sur la paroi cylindrique de la coquille.

Toutefois, lors de l'assemblage des composants du servomoteur, le centrage du couvercle sur la coquille n'est assurée que par l'extrémité de la membrane et, par suite, manque de précision.

Enfin, avec les servomoteurs de l'Art Antérieur, il subsiste un problème de démontabilité en cas d'intervention, tant au cours qu'à la fin de la vie du véhicule ainsi équipé.

La présente invention vise à obvier aux inconvénients sus-mentionnés avec un servomoteur perfectionné facile à mettre en place dans le véhicule, ne nécessitant pas de platine intermédiaire, maîtrisant les forces mises en jeu et permettant d'assurer un assemblage aisé et précis sans opération complexe.

Selon l'invention, le sous-ensemble est tel que, en combinaison :
- Coquille et couvercle sont chacun pourvus d'un bord périphérique radial, le bord du couvercle s'appuyant directement sur celui de la coquille lequel s'appuie sur le tablier, côté habitacle ;
- Le couvercle comporte, faisant saillie dans le servomoteur une languette circulaire dont l'extrémité interne vient compresser radialement l'extrémité périphérique de la membrane sur la paroi cylindrique de la coquille et ;
- Le couvercle comporte, faisant saillie de sa paroi extérieure, une pluralité de nervures parallèles entre elles dont certaines constituent pièces d'appui du pivot de la pédale.

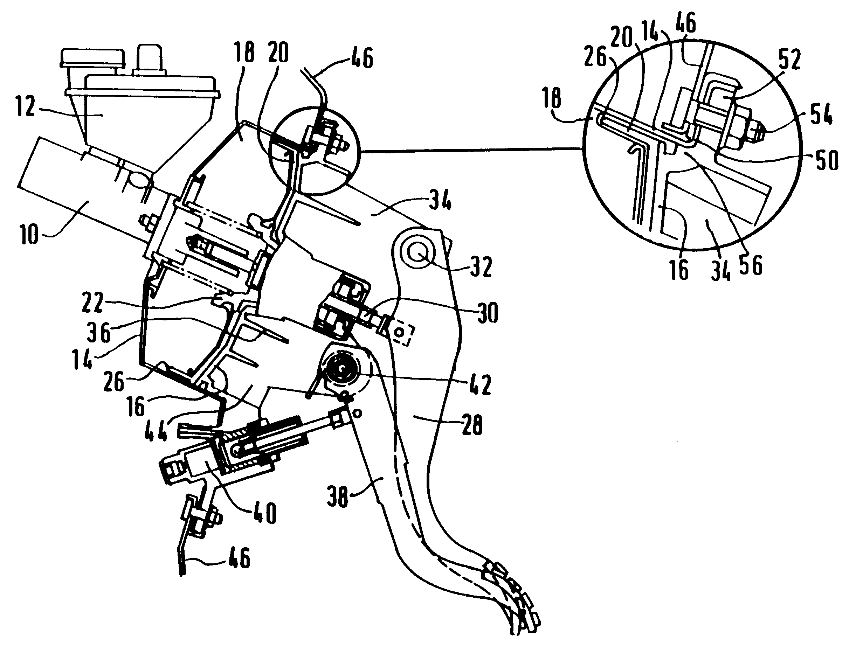

L'invention sera mieux comprise, et d'autres buts, avantages et caractéristiques de celle-ci apparaîtront plus clairement à la lecture de la description qui suit du mode de réalisation préféré et à laquelle une planche de dessin est annexée sur laquelle :
- La Figure Unique représente schématiquement en coupe un sous-ensemble conforme à l'invention.

En référence maintenant à cette Figure Unique, l'homme du métier reconnaîtra un maître-cylindre 10 pourvu de son réservoir 12 de fluide sous basse pression.

Le maître-cylindre 10 est fixé à la coquille 14 d'un servomoteur. Cette coquille 14 est fermée par un couvercle 16.

De façon conventionnelle, le servomoteur comporte deux chambres 18, 20 séparées entre elles par un piston 22, l'étanchéité étant assurée par une membrane déroulante 26.

La pédale de frein 28 est constituée par un levier permettant de commander une tige de poussée 30 du servomoteur par rotation autour d'un pivot 32.

Ce pivot est prisonnier d'une pièce d'appui 34 solidaire du couvercle 16 et constituée par certaines des nervures ménagées sur le couvercle.

Sur la Figure, on a également représenté une pédale d'embrayage 38 commandant un émetteur d'embrayage 40, et dont le pivot 42 est également prisonnier d'une pièce d'appui 44 constituée par des nervures prévues dans le couvercle. De préférence, l'émetteur d'embrayage 40 est intégré au couvercle 16 du servomoteur.

Comme mieux représenté dans la partie agrandie de la Figure, le sous-ensemble est monté sur le tablier 46 par l'habitacle.

Couvercle et coquille comportent tous deux un bord périphérique radial 50, 52 s'appuyant l'un sur l'autre, le bord 50 de la coquille s'appuyant sur le tablier 46 côté habitacle. Un moyen de fixation, tel des vis 54, fixe l'ensemble.

Ainsi, lors d'un freinage, les forces exercées tant sur la coquille 14 que sur le couvercle 16 sont directement transmises au tablier 46 sans pièce intermédiaire.

En outre, il y a séparation totale des forces qui ne peuvent donc plus se transmettre de couvercle à coquille ou réciproquement. De ce fait, un sertissage entre coquille et couvercle n'est plus nécessaire, ce qui simplifie beaucoup la fabrication du servomoteur.

Le couvercle 16 comporte une languette circulaire 56 faisant saillie à l'intérieur du servomoteur de manière à assurer le centrage du couvercle 16 sur la coquille 14.

L'extrémité de cette languette est rainurée de manière à accueillir l'extrémité périphérique de la membrane 26 et de compresser celle-ci radialement contre la partie cylindrique de la coquille 14.

Du fait de cette conception plus simple, il est possible de réaliser le couvercle 16 en un matériau rigide de type thermo-durcissable et non en tôle comme usuel, ce qui permet d'alléger l'ensemble. La pluralité de nervures 36 pratiquée sur la partie arrière du couvercle 16 permet alors de renforcer ce dernier et de répartir uniformément les forces appliquées au couvercle.

En outre certaines de ces nervures constituent favorablement les pièces d'appui des pivots 32, 42 des pédales 28, 38.

De façon favorable, la paroi interne du couvercle 16 comporte des rainures permettant de supprimer l'obligation des bourrelets classiques dans la membrane destinée à éviter que la membrane 26 vienne coller sur le couvercle 16 altérant ainsi le fonctionnement du servomoteur.

## Revendications

1. Sous-ensemble de freinage pour véhicule comportant un compartiment moteur et un habitacle séparés par un tablier (46), le dit sous-ensemble comprenant : un servomoteur pneumatique d'assistance commandé au moyen d'une pédale (28) et destiné à être fixé au dit tablier (46), le dit servomoteur comprenant coaxialement une coquille avant (14) présentant une paroi cylindrique, et un couvercle arrière (16), et comportant intérieurement deux chambres (18, 20) séparées de façon étanche par un piston (22) pourvu d'une membrane (26) assurant l'étanchéité entre les deux chambres, un maître-cylindre (10) fixé à la coquille avant (14) et au moins une pédale (28) de frein, la coquille (14) et le couvercle (16) du dit sous-ensemble étant chacun pourvus d'un bord périphérique radial, le bord (52) du couvercle s'appuyant directement sur celui (50) de la coquille lequel s'appuie sur le tablier (46), côté habitacle ;
- Le dit couvercle (16) comportant, faisant saillie dans le dit servomoteur, une languette circulaire de centrage (56) dont l'extrémité interne vient compresser radialement l'extrémité périphérique de la dite membrane (26) sur la paroi cylindrique de la dite coquille (14) et ;
- Le dit couvercle (16) comportant, faisant saillie de sa paroi extérieure, une pluralité de nervures (36) dont certaines (34) constituent pièces d'appui (34) du pivot (32) de la pédale (28).

2. Sous-ensemble selon la revendication 1, caractérisé en ce que d'autres nervures (36) constituent pièces d'appui (44) du pivot (42) d'une pédale d'embrayage.

3. Sous-ensemble selon la revendication 1 ou 2, caractérisé en ce qu'un émetteur d'embrayage (40) est intégré au dit couvercle (16).

4. Sous-ensemble selon l'une quelconque des revendications précédentes, caractérisé en ce que la paroi intérieure du dit couvercle (16) comporte des rainures.

## Claims

1. Brake subassembly for a vehicle having an engine compartment and a passenger cell separated by a bulkhead (46), said subassembly comprising: a pneumatic boost servomotor controlled by means of a pedal (28) and intended to be fixed to said bulkhead (46), said servomotor comprising, coaxially, a front shell (14), having a cylindrical wall, and a rear cover (16) and having, on the inside, two chambers (18, 20) separated in leaktight fashion by a piston (22) provided with a diaphragm (26) ensuring leaktightness between the two chambers, a master cylinder (10) fixed to the front shell (14) and at least one brake pedal (28), the shell (14) and cover (16) of the said subassembly being each provided with a radial peripheral rim, the rim (52) of the cover bearing directly on that (50) of the shell, which bears on the bulkhead (46) on the passenger-cell side;
- said cover (16) having a circular centering tongue (56) which projects into said servomotor and the inner end of which comes to compress radially the peripheral end of said diaphragm (26) on the cylindrical wall of said shell (14) and;
- said cover (16) also having a plurality of ribs (36) which project from its exterior wall and certain of which (34) constitute support pieces (34) for the pivot (32) of the pedal (28).

2. Subassembly according to Claim 1, characterized in that other ribs (36) constitute support pieces (44) for the pivot (42) of a clutch pedal.

3. Subassembly according to either of Claims 1 and 2, characterized in that a clutch transmitter (40) is integrated into said cover (16).

4. Subassembly according to any of the preceding claims, characterized in that the interior wall of said cover (16) has ribs.

## Patentansprüche

1. Bremsunterbaugruppe für ein Fahrzeug mit einem Motorraum und einem Innenraum, die durch eine Spritzwand (46) getrennt sind, wobei die Unterbaugruppe enthält: einen pneumatischen Unterstützungsservomotor, der mittels eines Pedals (28) gesteuert wird und dazu vorgesehen ist, an der Spritzwand (46) befestigt zu werden, wobei der Servomotor koaxial eine vordere Schale (14) mit einer zylindrischen Wand und eine hintere Abdeckung (16) aufweist und im Inneren zwei Kammern (18, 20) enthält, die in dichter Weise durch einen Kolben (22) getrennt sind, der mit einer Membran (26) versehen ist, welche die Dichtigkeit zwischen den beiden Kammern gewährleistet, sowie einen an der vorderen Schale (14) befestigten Hauptzylinder (10) und wenigstens ein Bremspedal (28), wobei die Schale (14) und die Abdeckung (16) der Unterbaugruppe jeweils mit einem radialen Umfangsrand versehen sind, wobei der Rand (52) der Abdeckung direkt an dem Rand (50) der Schale anliegt, welcher an der Spritzwand (46) innenraumseitig anliegt;
- wobei die Abdeckung (16) einen in den Servomotor hineinragenden, kreisförmigen Zentrieransatz (56) aufweist, dessen Innenende das Umfangsende der Membran (26) an der zylindrischen Wand der Schale (14) radial zusammendrückt; und
- wobei die Abdeckung (16) mehrere von ihrer Außenwand hervorstehende Rippen (36) aufweist, von denen einige (34) Halteelemente (34) für den Drehzapfen (32) des Pedals (28) bilden.

2. Unterbaugruppe nach Anspruch 1, dadurch gekennzeichnet, daß anderen Rippen (36) Halteelemente (44) für den Drehzapfen (42) eines Kupplungspedals bilden.

3. Unterbaugruppe nach Anspruch 1 oder 2, dadurch gekennzeichnet, daß in die Abdeckung (16) ein Kupplungsgeber (40) integriert ist.

4. Unterbaugruppe nach einem der vorangehenden Ansprüche, dadurch gekennzeichnet, daß die Innenwand der Abdeckung (16) Nuten aufweist.
